# EUROPEAN PATENT APPLICATION

(11) **EP 2 658 304 A1**
(43) Date of publication of application: **30.10.2013**
(21) Application number: 13165288.5
(22) Date of filing: 25.04.2013
(51) Int. Cl.: H04W 24/00, H04L 12/26, H04W 80/06

(54) **Setting an Optimal Ping Interval**

(30) Priority: 26.04.2012 KR 20120043803
(71) Applicant: Samsung Electronics Co., Ltd, Gyeonggi-do 443-742 (KR)
(72) Inventor: Cheong, Myeong-Ja, Gyeonggi-do (KR)
(74) Representative: Gover, Richard Paul

(57) **Abstract**

A method of setting an optimal ping interval and an electronic device therefor can reduce power consumption due to computation of each of the portable terminals by calculating a ping interval and transmitting the calculated ping interval to each of the portable terminals at a server. The server may obtain an optimal ping interval quickly because a request of each of a plurality of portable terminals is used for calculating a ping interval. The method includes setting a ping value to a ping interval, when there is the ping value received from a server and attempting to ping packets to the server using the ping interval, when a network connection is not lost when attempting to ping packets to the server.

## Description

### BACKGROUND OF THE INVENTION

### 1. Field of the Invention

The present invention relates to a ping interval between devices which can periodically send short data packages to a base station or host and receive a response, typically to test, determine or maintain accessibility of the base station or host. More particularly, the present invention relates to a method of setting an optimal ping interval between a server and a portable terminal and an electronic device therefor.

### 2. Description of the Related Art

In order to prevent a connected network socket from being closed (i.e. a time-out closing the connection after a period of inactivity), a server and a portable terminal maintains their connection through a ping operation in which the portable terminal transmits packets to the server and receives a response for the packets at intervals of a predetermined time.

A network can have a different socket close time according to particular areas (e.g., adjacent areas where a network connection timeout is equally applied and areas discriminated by a Mobile Country Code (MCC), a Mobile Network Code (MNC), etc.), it is difficult to apply a ping interval as a fixed time to all portable terminals.

In operation, the network does not inform the portable terminals about the socket close time, resulting in each of the portable terminals being required to search for an optimal ping interval for itself and perform an operation searching for a suitable ping interval according to its own algorithm. This operation includes multiple ping operations being performed until the optimal ping interval is discovered.

However, in order to search ping intervals of a plurality of portable terminals, it is necessary to move packets by the number of at least the plurality of portable terminals. Also, each of the plurality of portable terminals may not search its ping interval by one ping operation but search performing several ping operations, for each search may comprise at least three or more ping operations.

There is a problem in that a traffic load of a network, the generation of billing, and power consumption of each of the portable terminals are increased according to movement of unnecessary ping packets (when attempting to ping packets more frequently than an optimized ping interval), before the optimal ping interval is discovered. Also, there is a problem in that each of the portable terminals must perform ping operations by a minimum of three times to a maximum of an infinite number of times (typically somewhere in between).

The portable terminals in the same environment (adjacent areas where a network connection timeout is equally applied) will have the same socket close time, so there is a problem in that all the portable terminals in the same environment duplicate and perform the same operation to determine the optimal ping interval, which is a waste or power consumption, network resources, and time.

### SUMMARY OF THE INVENTION

An aspect of the present invention is to solve at least some of the above-mentioned problems and/or disadvantages and to provide at least the advantages described below. Accordingly, the present invention provides a method of setting an optimal ping interval in a communication system and an electronic device therefore.

An exemplary aspect of the present invention provides a method of transmitting a socket close time to a portable terminal at a server of a communication system and reduces the burden of the portable terminal connected to the server to discover a ping interval and an electronic device therefor.

Another exemplary aspect of the present invention is to provide a method of enhancing the efficiency of an operation performed by each of portable terminals connected to a server by collectively calculating and transmitting the operation duplicated and performed while being classified according to each of the portable terminals at the server to obtain an optimal ping interval in a communication system and an electronic device therefore.

In accordance with an exemplary aspect of the present invention, a method of setting a ping interval in an electronic device is provided. The method preferably includes when there is the ping value received from a server setting the ping interval of the electronic to the ping value from the server, and attempting to ping packets to the server using the ping interval, when it is determined by the electronic device that a network connection is not lost when attempting to ping packets to the server.

In accordance with another exemplary aspect of the present invention, an electronic device for setting a ping interval is provided. The electronic device preferably includes one or more processors, a non-transitory memory, and one or more programs, each of the one or more programs is comprised of machine executable code which is stored in the memory and when executed by the one or more processors will configure the one or more processors to seta ping value to a ping interval, when the ping value is received from a server, and initiating an operation to ping packets to the server using the ping interval when a network connection is not lost when attempting to ping packets to the server.

In the electronic device, the one or more processors is configured for transmitting the ping interval to the server, when attempting to ping packets to the server.

In the electronic device, the one or more processors is configured for attempting to execute a network connection using a first ping value, when the network connection is lost while attempting to ping packets to the server.

In the electronic device, the one or more processors is configured for transmitting the first ping value to the server, while attempting to execute the network connection.

In the electronic device, the one or more processors is configured for attempting to execute a network connection using a second ping value, while executing an initial network connection.

In the electronic device, the one or more processors is configured for transmitting the second ping value to the server, while executing the initial network connection.

In accordance with another exemplary aspect of the present invention, a method of setting a ping interval in a server device is provided. The method preferably includes determining an optimal ping interval, checking whether at least one electronic device initially requests a network connection when a ping request is received from the electronic device, and transmitting the optimal ping interval to the electronic device when the electronic device initially requests the network connection.

In accordance with another exemplary aspect of the present invention, a server device for setting a ping interval is provided. The server device includes one or more processors, a non-transitory memory, and one or more programs, each of the one or more programs is comprised of machine executable code and is stored in the memory, and when executed by the one or more processors configures the one or more processors to determine an optimal ping interval, checking whether at least one electronic device initially requests its network connection when a ping request is received from the electronic device, and transmitting the optimal ping interval to the electronic device in response to the electronic device initially requesting the network connection.

In the server device, the one or more processors are configured for comparing a ping interval included in the network connection request with the optimal ping interval when the electronic device is not initially requesting the network connection, resetting the optimal ping interval to a value obtained by subtracting a predetermined time from the ping interval included in the network connection request when the ping interval included in the network connection request is less than the optimal ping interval, and controlling transmitting the reset optimal ping interval to the electronic device.

In the server device, the one or more processors are configured for comparing a ping interval included in the network connection request with the optimal ping interval when the electronic device is not initially requesting the network connection, resetting a value obtained by subtracting a predetermined time from the optimal ping interval to an optimal ping interval when the ping interval included in the network connection request is equal to the optimal ping interval, and controlling transmitting of the reset optimal ping interval to the electronic device.

In the server device, the one or more processors are configured for comparing a ping interval included in the network connection request with the optimal ping interval when the electronic device is not initially requesting the network connection and controlling transmitting of the optimal ping interval to the electronic device when the ping interval included in the network connection request is greater than the optimal ping interval.

In the server device, the one or more processors are configured for checking whether the electronic device initially requests the network connection when it is determined that the server has not previously received the ping request from the electronic device, resetting a value obtained by subtracting a predetermined time from the optimal ping interval to an optimal ping interval when the electronic device initially requests the network connection, and controlling transmitting of the reset optimal ping interval to the electronic device.

In the server device, the one or more processors are configured for setting the reset optimal ping interval to a default value when the reset optimal ping interval is less than or equal to a threshold value.

In the server device, the network connection request from the electronic device includes information indicating that the network connection is an initial request.

In the server device, the one or more processors are configured for adding a predetermined time to the optimal ping interval transmitted to the electronic device according to a predetermined rate and controlling transmitting of the added optimal ping interval.

In the server device, the optimal ping interval is determined based on a channel state.

In the server device, the one or more processors are configured for receiving the ping request from the electronic device, resetting the ping interval included in the ping request to the optimal ping interval when the ping interval included in the ping request is greater than the optimal ping interval, and transmitting the reset optimal ping interval to the electronic device.

In the server device, the network connection request includes a failed ping interval when the electronic device is not an initial request for the network connection.

In an exemplary aspect, an electronic device for setting a ping interval, the electronic device comprising:
a controller comprising one or more processors; a non-transitory memory; and one or more programs comprising machine executable code which is stored in the non-transitory memory and is executed by the one or more processors. The one or more processors are configured by the machine executable code of the electronic device for setting a ping value to a ping interval, when there is the ping value received from a server and attempts to ping packets to the server using the ping interval, in which a network connection is not lost while attempting to ping packets to the server.

In another exemplary aspect, a server device for setting a ping interval comprises; a controller comprising one or more processors; a non-transitory memory; and one or more programs comprising machine executable code which is stored in the memory and is configured to be executed by the one or more processors. The one or more processors are configured by the machine executable code for determining an optimal ping interval, checking whether at least one electronic device requests its network connection for the first time when a ping request is ever received from the electronic device, and controlling transmitting of the optimal ping interval to the electronic device when the electronic device requests the network connection for the first time.

### BRIEF DESCRIPTION OF THE DRAWINGS

The above and other exemplary aspects, features and advantages of certain exemplary embodiments of the present invention will better appreciated by the person of ordinary skill in the art from the following detailed description taken in conjunction with the accompanying drawings, in which:
FIG. 1 is a schematic view illustrating a network configuration according to an exemplary embodiment of the present invention;
FIG. 2 is a block diagram illustrating configuration of a portable terminal according to an exemplary embodiment of the present invention;
FIG. 3 is a block diagram illustrating configuration of a server according to an exemplary embodiment of the present invention;
FIG. 4 is a flowchart illustrating an exemplary operational process of a portable terminal according to an exemplary embodiment of the present invention; and
FIGs. 5A and 5B are flowcharts illustrating an exemplary operational process of a server according to an exemplary embodiment of the present invention.

### DETAILED DESCRIPTION

Exemplary embodiments will be described herein below with reference to the accompanying drawings. In the following description, well-known functions or constructions may not be described in detail when their inclusion would obscure appreciation of the invention by a person of ordinary skill in the art with unnecessary detail. An artisan should understand and appreciate that the when disclosure refers to "certain" rates or times, the meaning is predetermined rates or times.

Hereinafter, a exemplary description will be given for a method of setting an optimal ping interval in a communication system and an electronic device therefor.

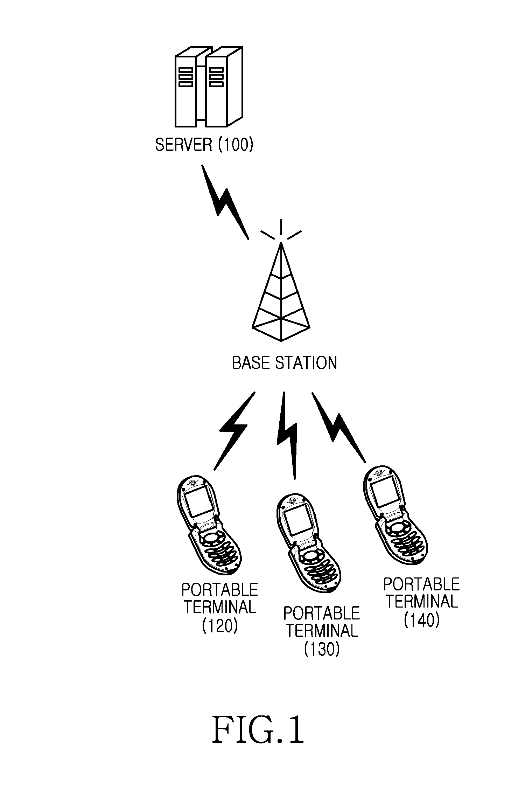

FIG. 1 is a schematic view illustrating a network configuration according to one an exemplary embodiment of the present invention.

Referring now to FIG. 1, a server 100 according this illustrative example, compares ping intervals of portable terminals 120, 130, and 140, searches an optimal interval, and retransmits the searched optimal ping interval to each of the portable terminals 120, 130, and 140.

The server 100, which comprises hardware, includes a processor that determines an optimal interval while being classified according to the same environment (adjacent areas where a network connection timeout is equally applied and areas discriminated by an MCC, an MNC, etc.). Herein, the server 100 determines a ping interval not using only one portable terminal but using a plurality of portable terminals which request connection and ping.

As it takes less time to obtain an optimized ping interval from the server 100 than the time required for each of the portable terminals to calculate and obtain a ping interval directly, each of the portable terminals 120, 130, and 140 may maintain their connection quickly, stably, and at low cost.

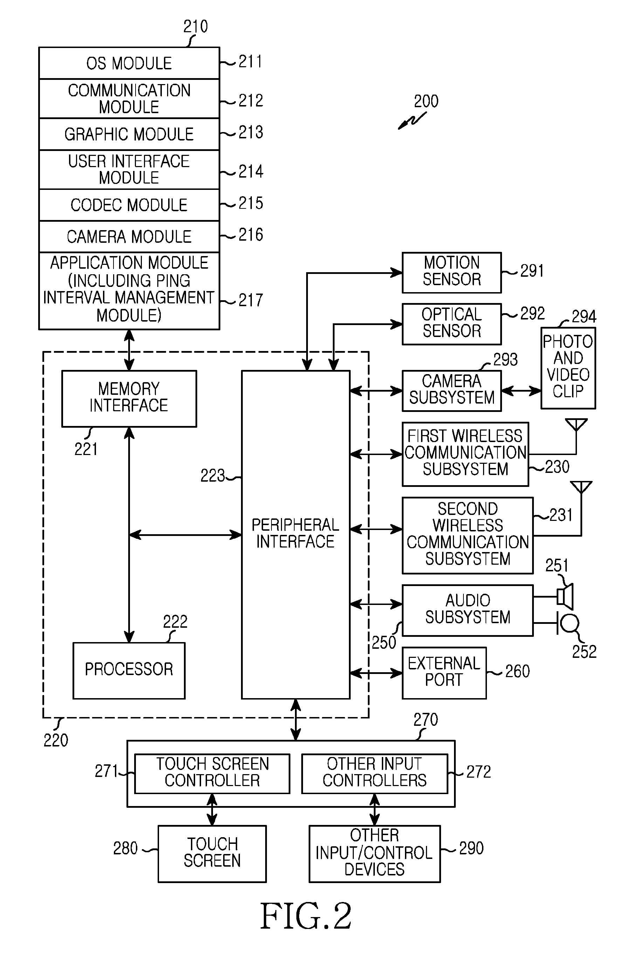

FIG. 2 is a block diagram illustrating an exemplary configuration of a portable terminal according to an exemplary embodiment of the present invention.

Referring now to FIG. 2, this portable terminal 200 200 in this example comprises a portable electronic device. The portable terminal may be one of a number of different apparatuses such as a mobile phone, a mobile pad, a media player, a tablet computer, a handheld computer, and a Personal Digital Assistant (PDA). Also, the portable terminal may comprise a portable electronic device in which two or more functions are combined from among these different apparatuses or others. As long as the device operates to maintains a network connection via pinging, such an apparatus can be among thus defined as the portable electronic device.

This portable terminal 200 in this example includes a non-transitory memory 210, a processor unit 220, a first wireless communication subsystem 230, a second wireless communication subsystem 231, an external port 260, an audio subsystem 250, a speaker 251, a microphone 252, an Input/Output (I/O) system 270, a touch screen 280, other input/control devices 290, a motion sensor 291, an optical sensor 292, and a camera subsystem 293. The memory 210 and the external port 260 may be a plurality of memories and external ports, respectively.

The processor unit 220 comprises hardware and may include a memory interface 221, one or more processors 222, and a peripheral interface 223. The memory interface 221, the one or more processors 222, and/or the peripheral interface 223 may be separately configured or may be integrated in hardware in one or more Integrated Circuits (ICs). The processor 222 executes several software programs and controls the performance of several functions for the portable terminal 200. Also, the processor 222 performs process and control for voice communication and data communication. In addition, the processor 222 plays a role in executing a specific software module stored in the memory 210 that is executed by the professor to configure the processor to perform several specific functions. In other words, the processor 222 interacts with the machine executable code stored in the memory 210 and performs the method according to an exemplary embodiment of the present invention.

In accordance with an exemplary embodiment of the present invention, the processor 222 performs management of a ping interval which will be described later. Herein, the management of the ping interval should be understood by a person of ordinary skill in the art as the management of the ping interval at about a time period when a network is not disconnected.

The processor 222 may include one or more processors, microprocessors or sub processor. More particularly, the processor 222 may include data processors and/or an image processor. The processor 222 may separately include the data processors and the image processor. Also, the processor 222 may include several processors for performing different functions. The peripheral interface 223 connects the I/O system 270 of the portable terminal 200 and several peripheral devices to the processor 222 and the memory 210 (though the memory interface 221).

A variety of components of the portable terminal 200 may be coupled by one or more communication buses (not written in reference numbers) or stream lines (not written in reference numbers).

With continued reference to FIG. 2, the external port 260 is used to connect the portable terminal 200 to another electronic device directly or to another electronic device indirectly through a network (e.g., the Internet, an intranet, a wireless Local Area Network (LAN), etc.). For example, the external port 260 means, which is not limited to, a Universal Serial Bus (USB) port, a firewire port, etc.

The motion sensor 291 and the optical sensor 292 can connect to the peripheral interface 223 and can perform several functions. For example, the motion sensor 291 and the optical sensor 292 can connect to the peripheral interface 223, and can sense motion of the portable terminal 200, and/or sense light exterior to the portable device 200. Furthermore, a position measurement system and other sensors such as a temperature sensor, a bio-sensor, etc. may connect to the peripheral interface 223 and may perform related functions.

The camera subsystem 293 may perform a camera function like a function for recording a photo and video clip 294.

The optical sensor 292 can comprise, a Charge Coupled Device (CCD) or a Complementary Metal-Oxide Semiconductor (CMOS) device.

In this example, a communication function is performed through the first and second wireless communication subsystems 230 and 231. Each of the first and second wireless communication subsystems 230 and 231 can include a radio frequency transmitter and receiver (or a transceiver) and/or a beam (e.g., infrared ray) transmitter and receiver, or a transceiver. The first communication subsystem 230 and the second communication subsystem 231 may be classified according to a communication network through which the portable terminal 200 communicates. For example, the communication network can comprise, but is not limited to, a Global System for Mobile communication (GSM) network, an Enhanced Data GSM Environment (EDGE) network, a Code Division Multiple Access (CDMA) network, a W-CDMA network, a Long Term Evolution (LTE) network, an Orthogonal Frequency Division Multiple Access (OFDMA) network, a Wireless Fidelity (Wi-Fi) network, a WiMax network, or/and a Bluetooth network, just to name some possibilities. Each of the first and second communication subsystems 230 and 231 may include a communication subsystem designed to be operated through the communication network.

The audio subsystem 250, for example, can connect to the speaker 251 and/or the microphone 252 and utilized for inputting and outputting an audio stream, such as a voice recognition function, a voice copy function, a digital recording function, and a phone call function. In other words, the audio subsystem 250 communicates with a user through the speaker 251 and the microphone 252.

The audio subsystem 250 receives a data stream through the peripheral interface 223 of the processor unit 220 and converts the received data stream into an electric stream. The converted electric stream is then transmitted to the speaker 251. The speaker 251 converts the electric stream into a sound wave to which the user may listen and outputs the converted sound wave. The microphone 252 converts a sound wave transmitted from the user or other sound sources into an electric stream. The audio subsystem 250 receives the converted electric stream from the microphone 252. The audio subsystem 250 converts the received electric stream into an audio data stream and transmits the converted audio data stream to the peripheral interface 223. The audio subsystem 250 may include a connection for an attachable and detachable earphone, headphone, or headset.

The I/O system 270 can include a touch screen controller 271 and/or other input controllers 272. The touch screen controller 271 may be coupled to the touch screen 280 and may be exclusively controlling the touch screen, but it is possible that it could control other functions as well. The touch screen 280 and the touch screen controller 271 may detect, but is not limited to, contact and motion or stop of them using not only capacitive, resistive, infrared ray, and surface acoustic wave technologies for determining one or more contact points but also a certain multi-touch sensing technology including other proximity sensor arrays or other elements. In addition, "near-touch" in which a finger or stylus, etc. come within a predetermined distance of the touch screen can be considered a touch by the touch screen controller even though in such as case there is no actual physical contact with the touch screen.

The "other input" controllers 272 may be coupled to the other input/control devices 290. The other input/control devices 290 may include one or more buttons and an up/down button for controlling volume of the speaker 251 and the microphone 252 (in other words in this example, inputs other than via the touch screen). Herein, the one or more buttons may be a push button, a rocker button, etc. The other input/control devices 290 may be pointer devices such as a rocket switch, a thumb-wheel, a dial, a stick, and/or a stylus.

The touch screen 280 provides an input/output interface between the portable terminal 200 and the user. In other words, the touch screen 280 transmits touch input of the user to the portable terminal 200. Also, the touch screen 280 is a medium for displaying output from the portable terminal 200 to the user. The touch screen 280 displays visual output to the user. This visual output can be any of a text type, a graphic type, a video type, and a combined type of them.

In accordance with an exemplary embodiment of the present invention, the portable terminal 200 may decode and output an encoding video stream through a screen. This screen may comprise a touch screen for processing touch input.

The touch screen 280 can be constructed one of a number of different types of displays. For example, the touch screen 280 can be, but is not limited to, a Liquid Crystal Display (LCD), a Light Emitting Diode (LED), a Light emitting Polymer Display (LPD), an Organic Light Emitting Diode (OLED), an Active Matrix Organic Light Emitting Diode (AMOLED), or a Flexible LED (FLED), just to name a few possibilities.

The memory 210 may be coupled to the memory interface 221. The memory 210 can include a high-speed Random Access Memory (RAM) such as one or more magnetic storages, a non-volatile memory, one or more optical storages, and/or a flash memory (e.g., a NAND flash memory or a NOR flash memory).

The memory 210 stores software components comprising machine executable code in machine readable form. The machine executable code can include an Operating System (OS) module 211, a communication module 212, a graphic module 213, a user interface module 214, a codec module 215, a camera module 216, one or more application modules 217, etc., each of these modules comprising machine executable code on the machine readable medium.

The application module 217 can include a ping interval management module comprised of machine executable code that configures a processor for operation according to an exemplary embodiment of the present invention.

The OS module 211 (e.g., embedded OS such as Windows, Linux, Darwin, RTXC, UNIX, OS X, or VxWorks) includes several software components for controlling a general system operation. For example, control of this general system operation refers to memory management and control, storage hardware (device) control and management, power control and management, etc. OS module 211 can include be coupled to a processor or sub-processor that performs a function for smoothly communicating between several hardware components (devices) . It is possible that a module may include its own sub-processor that is configured for operation with machine executable code, and in such a case, can communicate with other hardware components.

The communication module 212, contains machine executable code that when executed by a processor can communicate with other external electronic devices such as a computer, a server, and/or a portable terminal through the first and second wireless communication subsystems 230 and 231 or the external port 260.

The graphic module 213 includes machine executable code that when executed configures a processor to control providing and displaying graphics on the touch screen 280. The term "graphics" means that texts, web pages, icons, digital images, videos, animations, etc. are included.

The user interface module 214 includes machine executable code that when executed configures a processor to control a user interface. The user interface module 214 includes contents about whether a state of a user interface has changed to another state, whether a state of a user interface has changed in condition, etc.

The codec module 215 can include machine executable code related to encoding and decoding of video files. The codec module 215 may include, for example, a video stream module such as an MPEG module and/or an H204 module that when executed configures a processor to control, for example, streaming. Also, the codec module 215 may include a codec module for several audio files such as AAA files, AMR files, and WMA files.

The camera module 216 includes machine executable code that when executed configures a processor to control performance of camera-related processes and functions.

The application module 217 includes machine executable code that when executed configures a processor to control a browser function, an email function, an instant message function, a word processing function, a keyboard emulation function, an address book function, a touch list function, a widget function, a Digital Right Management (DRM) function, a voice recognition function, a voice copy function, a position determining function, a location based service function, etc., just to name some non-limiting possibilities.

The memory 210 may include additional sets of machine executable code that when executed configures a processor to control other functions in addition to the above-described functions. Or, if necessary, the memory 210 include fewer sets of machine executable code than described above. A variety of functions of the portable terminal 200, which are described above or to be described later, may be executed by one or more streaming processing, hardware including an Application Specific Integrated Circuit (ASIC), software loaded into hardware and executed, and/or combination.

The portable terminal may be an electronic device such as, for example, a laptop, a smart phone, a net book, a mobile internet device, an ultra mobile PC, a tablet personal computer, a mobile telecommunication terminal, PDA having a camera and the like herein, just to name some of the possibilities.

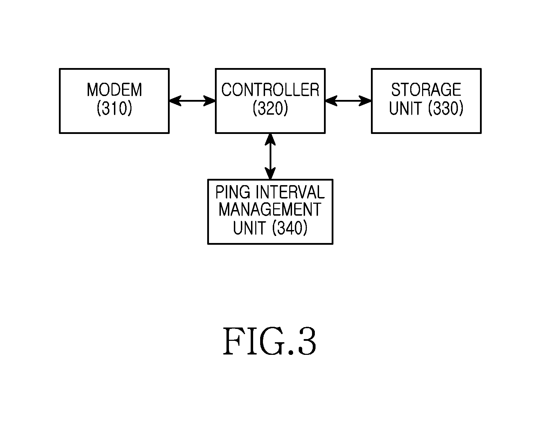

FIG. 3 is a block diagram illustrating configuration of a server according to one embodiment of the present invention.

Referring now to FIG. 3, the server preferably includes a modem 310, a controller 320, a storage unit 330, and a ping interval management unit 340. The controller 320 in this example refers to the processor of FIG. 2, and may include a plurality of processors.

The modem 310 comprises the machine executable code that when loaded into a processor or sub-processor for communicating with other devices, and includes a wire processing unit, a baseband processing unit, etc. The wire processing unit converts a signal received through a wire path into a baseband signal and provides the converted baseband signal to the baseband processing unit. The wire processing unit converts a baseband signal received from the baseband processing unit into a wire signal to transmit the wire signal on a real wire path and transmits the converted wire signal through the wire path.

The controller 320 controls an overall operation of the server. Particularly, in accordance with an exemplary embodiment of the present invention, the controller 320 includes or controls the ping interval management unit 340.

The storage unit 330 comprises machine executable code for controlling the overall operation of the server and stores temporary data generated when the program is executed. Particularly, in accordance with an exemplary embodiment of the present invention, the storage unit 330 stores an Optimize_Ping_Interval (OPI) determined by the server. An operation performed by the storage unit 330 is performed based on machine executable code that is loaded into hardware such as a processor or sub-processor from the storage unit 330.

The ping interval management unit 340 includes hardware such as a processor or sub-processor that executes machine readable code to perform a function for managing a ping interval of a portable terminal. The function of the ping interval management unit 340 will be described later in detail. The ping interval management unit 340 can comprise the machine executable code stored in the storage unit 330 which is loaded into and executed by a processor or sub-processor in the ping management unit 340.

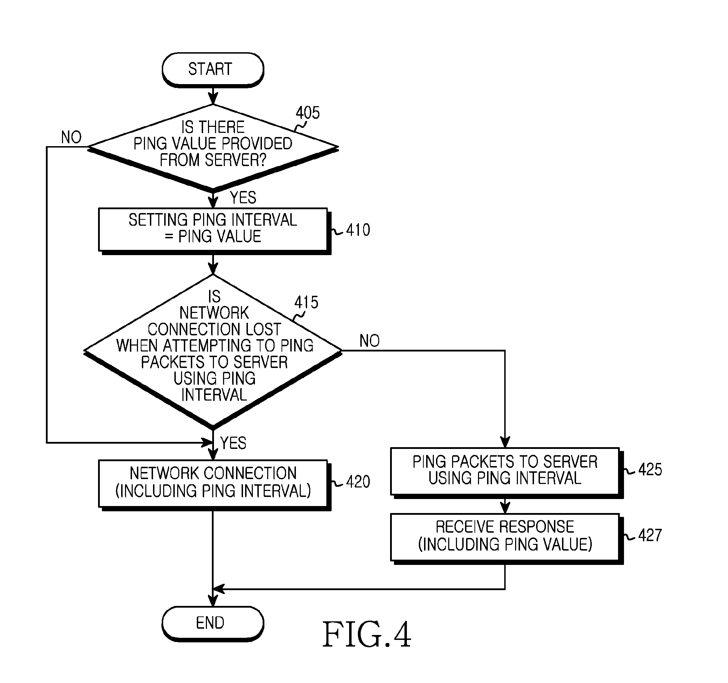

FIG. 4 is a flowchart illustrating an exemplary operational process of a portable terminal according to an embodiment of the present invention.

Referring now to FIG. 4, at S405 a processor or sub-processor 222 associating with the ping interval management module 217 of the portable terminal checks executes machine executable code to configure the processor or sub-processor as to whether there is a ping value provided from a server.

At S410, when there is the ping value provided from the server, then at S410 the processor configured by the ping interval management module 217 determines the received ping value as a ping interval.

At S415, the processor or sub-processor configured by the ping interval management module 217 checks whether or not a network connection is lost when attempting to ping packets to the server using the ping interval.

If the network connection is lost, then at S420 the processor or sub-processor configured by the ping interval management module 217 attempts to execute a network connection again. Herein, the processor or sub-processor configured by the ping interval management module 217 may provide a network connection request with a current ping interval to the server.

At S425, if the network connection is not lost, the processor or sub-processor configured by the ping interval management module 217 pings packets to the server using the ping interval.

At S427, the processor or sub-processor configured by ping interval management module 217 receives a response from the server. The response may include the ping value (OPI).

If at S405 there is no ping value provided from the server , then at S420 the processor or sub-processor configured by the ping interval management module attempts to execute a network connection using a current basic ping interval of the portable terminal.

Herein, if a network connection is lost because a ping interval is long when the portable terminal requests its connection to the server, the ping interval management module 217 determines a ping value, used as a ping interval, as the ping interval. Otherwise, the ping interval management module 217 determines "0" as a ping interval. The ping interval management module 217 via the communication unit transmits the ping interval to the server together when attempting to ping packets such that the server knows that a connection is requested for any of a number of purposes. The processor or sub-processor configured by the ping interval management module 217 receives a ping value as a response from the server. The portable terminal uses the ping value transmitted from the server as a ping interval.

The method described above in relation with FIG. 4 under of the present invention may be provided as one or more instructions in one or more software modules stored in the respective apparatus.

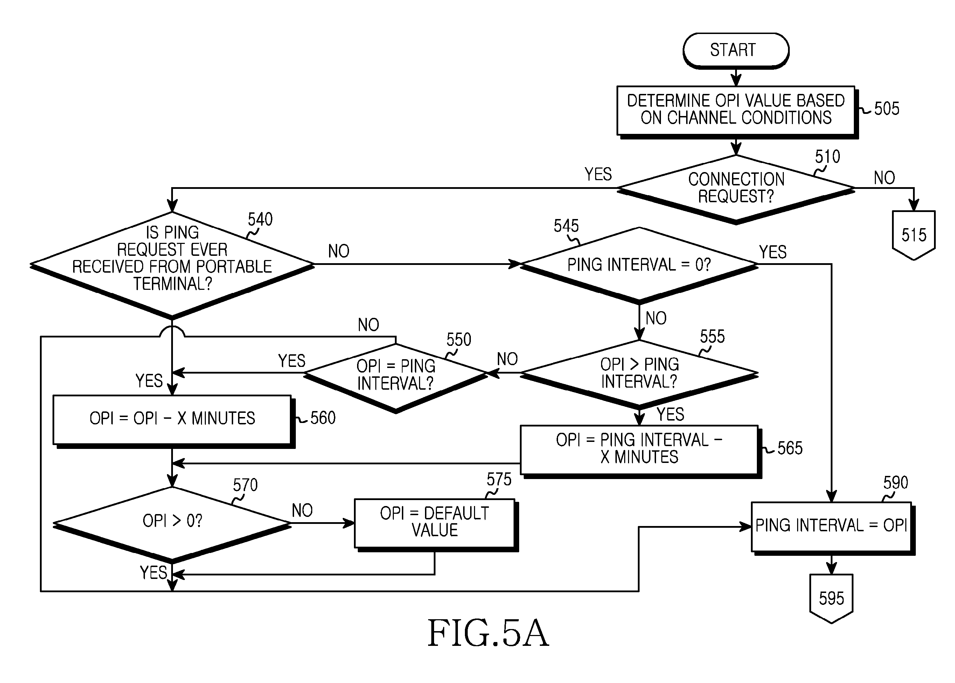

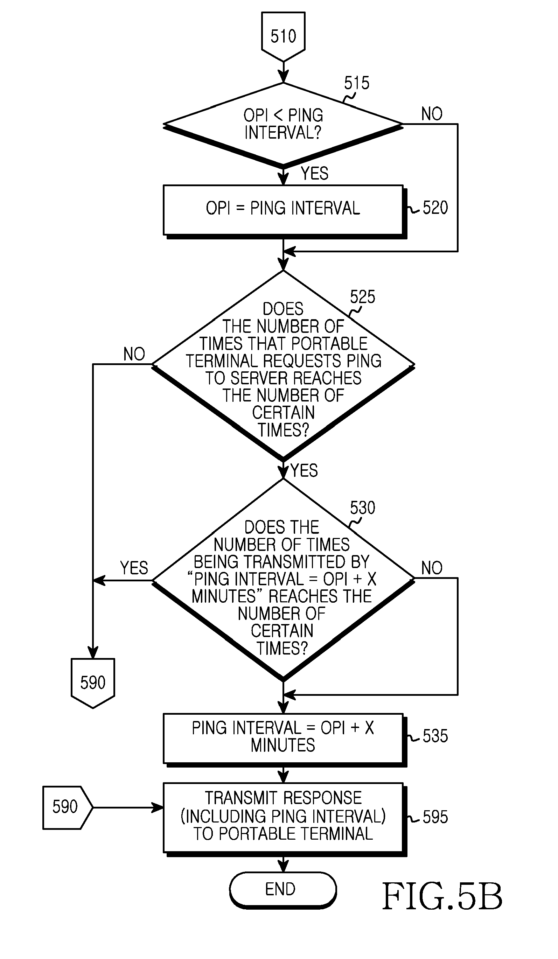

FIGs. 5A and 5B are flowcharts illustrating an exemplary operational process of a server according to an embodiment of the present invention.

Referring now to FIGs. 5A and 5B, at S505, when determining an initial OPI value, a ping interval management unit 340 of the server determines the OPI value based on a channel conditions (state) value between a portable terminal and a base station. Herein, the channel state value may be provided from the base station. Or, the channel state value may be included in a ping interval data value and may be provided from the base station. The ping interval management unit 340 sets the determined value to a base value. The OPI value may be referred to as an optimal ping interval.

At S510, when a connection request is not received from the portable terminal (e.g., when a ping request is received) , then at S515 (FIG. 5B) the server checks whether a ping interval included in the ping request is greater than the OPI value.

If at S515 the ping interval is greater than the OPI value, then at S520 the server sets the ping interval to be equal to the OPI value. Herein, the ping interval is an interval when the portable terminal succeeds in a ping operation. As it is preferable that the portable terminal has a longer ping interval, the server sets the ping interval to the OPI value so that the connection is not lost between the portable terminal and the network server.

If at S515 the ping interval is not greater than the OPI value, the server does not set the ping interval to the OPI value because it is preferable that the portable terminal has a greater OPI value.

Then at S525, it is determined whether the number of times that the portable terminal requests a ping to the server reaches the number of certain (I.e. "predetermined") times. When the number of times that the ping interval is set to an "OPI + x minutes" (x minutes may be changed to a random value) and at S530 is transmitted to the portable terminal is greater than or equal to the number of certain times, then at S590 (FIG. 5A) the server sets the ping interval set to the "OPI + x minutes" to a new OPI value.

At S595, the server transmits a response transmitted to the portable terminal with the set ping interval to the portable terminal.

If the number of times that the ping interval is set to the "OPI + x minutes" and at S530 is transmitted to the portable terminal is not greater than or equal to the number of certain times, then at S535the server sets the ping interval to the "OPI + x minutes".

At S595 the server transmits the response transmitted to the portable terminal with the set ping interval to the portable terminal.

If at S525 the number of times that the portable terminal requests a ping to the server does not reach the number of certain times, then at S590 the server sets the ping interval to the OPI value.

At S595, the server transmits the response transmitted to the portable terminal with the set ping interval to the portable terminal.

If the connection request (a connection request message) is received from the portable terminal, at S540 the server checks whether a ping request is never received from the portable terminal.

If the ping request is never received from the portable terminal, then at S560 the server sets an "OPI - x minutes" to a new OPI value with respect to the portable terminal (the portable terminal whose ping interval is 0) which request its connection. At this time, at S570 when the new OPI value is less than 0, then at S575 the server sets the OPI value to a basic (default) value.

At S590, the server sets the ping interval to the OPI value. At S595, the server transmits the response transmitted to the portable terminal with the set ping interval to the portable terminal.

If at S540 the ping request is ever received from the portable terminal and at S545 the ping interval included in the portable terminal is not 0, then at S555 the server checks whether the ping interval included in the connection request of the portable terminal is less than the OPI value.

If at S555 the ping interval included in the connection request of the portable terminal is less than the OPI value, then at S565 the server sets a "ping interval - x minutes" to a new OPI value because the OPI value is greater than a successful ping interval.

At this time, at S570 if the new OPI value is less than 0, then at S575 the server sets the OPI value as a basic value.

At S590, the server sets the ping interval to the OPI value. At S595, the server transmits the response transmitted to the portable terminal with the set ping interval to the portable terminal.

If at S550 the ping interval included in the connection request of the portable terminal is equal to the OPI value, then at S560 the server sets an "OPI value - x minutes" as a new OPI value because the OPI value is equal to a successful ping interval.

At this time, at S570 if the new OPI value is less than 0, then at S575 the server sets the OPI value to a basic value.

At S590, the server sets the ping interval to the OPI value. At S595, the server transmits the response transmitted to the portable terminal with the set ping interval to the portable terminal.

If at S550 the ping interval included in the connection request of the portable terminal is not equal to the OPI value, then at S590 the server sets the ping interval to the OPI value.

At S595, the server transmits the response transmitted to the portable terminal with the set ping interval to the portable terminal.

If a ping interval included when the portable terminal requests its connection to the server is not 0, the server determines that the value of the ping interval is unsuitable for the ping interval. If the value is less than an OPI value, the server stores the "ping interval - x minutes" in the OPI value.

When a connection request is received from the portable terminal, if a ping request is ever received from the portable terminal, the server searches a value to which a timeout is not applied. Accordingly, when the portable terminal requests its initial connection (when a ping interval is 0), the server transmits a response with an OPI value without change of the OPI value.

However, if a ping request is never received from the portable terminal, the server does not search a value to which a timeout is not applied. Accordingly, when the portable terminal requests its initial connection (when a ping interval is 0), the server sets an OPI value to an "OPI - x minutes" and transmits a response with the set value to the portable terminal. If the changed OPI value is less than or equal to 0, the portable terminal is reset to a basic value determined by the server.

If a ping request is received from the portable terminal, the server compares ping intervals included in the ping request. If the ping interval included in the ping request is greater than a currently stored OPI value, the server sets the ping interval to an OPI value. Accordingly, the ping interval may be increased. The server may transmit a response for the ping request with the OPI value to the portable terminal.

In accordance with an exemplary embodiment of the present invention, the server is applied while being classified according to the same environment (adjacent areas where a network connection timeout is equally applied). Accordingly, the server may have different OPI values while being classified according to environments. In this case, the server attempts to count the number of times that the portable terminal succeeds in a ping operation in the same environment, increase a ping interval by the "OPI + x minutes" at intervals of a certain time (e.g., a 10/10000 ping success rate) by the number of certain times, transmit packets at the increased ping interval. If the portable terminal succeeds in a ping operation, the ping interval may be increased. Herein, a transmission rate may be set by a test value or a theory value, or may be randomly set.

The method described above in relation with FIG. 5A, 5B under of the present invention may be provided as one or more instructions in one or more software modules stored in the respective apparatus.

The electronic device according to an exemplary embodiment of the present invention may reduce power consumption due to computation of each of the portable terminals by calculating a ping interval and transmitting the calculated ping interval to each of the portable terminals at a server. The server may obtain an optimal ping interval quickly because a request of each of a plurality of portable terminals is used for calculating a ping interval.

If the server obtains an optimal ping interval, the server transmits the ping interval to portable terminals immediately without separate calculation with respect to requested new connection of each of the portable terminals. Accordingly, the server may have quicker network stability. Each of portable terminals connected to the server may reduce billing, time, packets, and power consumption to be generated because ping packets are overused, according to quick network connection stability.

Also, because ping interval calculation according to an exemplary embodiment of the present invention is concentrated in only the beginning of the network connection of each of portable terminals, a burden may be reduced on a network.

The above-described apparatus and a method of operation according to the present invention can be implemented in hardware, and in part as firmware or as software or computer code that is stored on a non-transitory machine readable medium such as a CD ROM, a RAM, a floppy disk, a hard disk, or a magnetooptical disk or computer code downloaded over a network originally stored on a remote recording medium or a non-transitory machine readable medium and stored on a local non-transitory recording medium, so that the methods described herein are loaded into hardware such as a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, an artisan understands and appreciates that a "processor" or "microprocessor" constitute hardware in the claimed invention. Under the broadest reasonable interpretation, the appended claims constitute statutory subject matter in compliance with 35 U.S.C. §101.

The terms "unit" or "module" referred if herein is to be understood as constituting hardware such as a processor or microprocessor configured for a certain desired functionality, or a non-transitory medium comprising machine executable code, in accordance with statutory subject matter under 35 U.S.C. §101 and does not constitute software per se.

While the present invention has been particularly shown and described with reference to exemplary embodiments thereof, it will be understood by those skilled in the art that various changes in form and details may be made therein without departing from the spirit and scope of the present invention as defined by the appended claims.

## Claims

1. A method of setting a ping interval in an electronic device, the method comprising:
in response to receiving the ping value from a server, setting by a processor of the electronic device a ping interval to be equal to the received ping value, and
attempting to ping packets to the server using the ping interval, when determining that a network connection is not lost while attempting to ping packets to the server.

2. The method of claim 1, further comprising transmitting to the server the ping interval by a transceiver of a communication subsystem of the electronic device, when attempting to ping packets to the server.

3. The method of claim 1, further comprising attempting by the processor of the electronic device to execute a network connection using a first ping value, when the network connection is lost when attempting to ping packets to the server using the ping value received from the server.

4. The method of claim 3, further comprising transmitting by the transceiver of the electronic device the first ping value to the server, when attempting to execute the network connection.

5. The method of claim 3, further comprising attempting to execute a network connection using a second ping value, when executing an initial network connection. and
transmitting the second ping value to the server, when executing the initial network connection.

6. A method of setting a ping interval in a server device, the method comprising:
determining by the server an optimal ping interval;
checking by controller including a ping interval management unit whether at least one electronic device is initially requesting its network connection whenever a ping request is received from the electronic device; and
transmitting by the server the optimal ping interval to the electronic device when the electronic device initially requests the network connection.

7. The method of claim 6, further comprising;
comparing by the ping interval management unit a ping interval included in the network connection request with the determined optimal ping interval when the electronic device is not initially requesting the network connection;
resetting by the ping interval management unit the optimal ping interval to a value obtained by subtracting a predetermined time from the ping interval included in the network connection request when the ping interval included in the network connection request is less than the optimal ping interval; and
transmitting by the server the reset optimal ping interval to the electronic device.

8. The method of claim 6, further comprising;
comparing by the ping interval management unit a ping interval included in the network connection request with the optimal ping interval when the electronic device is not initially requesting the network connection;
resetting by the ping interval management unit a value obtained by subtracting a predetermined time from the optimal ping interval to an optimal ping interval when the ping interval included in the network connection request is equal to the optimal ping interval; and
transmitting by the server the reset optimal ping interval to the electronic device.

9. The method of claim 6, further comprising;
comparing by the ping interval management unit a ping interval included in the network connection request with the optimal ping interval when the electronic device is not initially requesting the network connection; and
transmitting by the server the optimal ping interval to the electronic device when the ping interval included in the network connection request is greater than the optimal ping interval.

10. The method of claim 6, further comprising:
checking by the ping interval management unit whether the electronic device is initially requesting the network connection with the server by determining whether a ping request has ever been received from the electronic device;
resetting by the ping interval management unit a value obtained by subtracting a predetermined time from the optimal ping interval to an optimal ping interval included in the network connection request when the electronic device is initially requesting the network connection;
transmitting by the server the reset optimal ping interval to the electronic device; and
setting by the ping interval management unit the reset optimal ping interval to a predetermined value when the reset optimal ping interval is less than or equal to a threshold value,
wherein the network connection request of the electronic device includes information indicating that the request for network connection is an initial request.

11. The method of claim 6, further comprising adding by the ping interval management unit a predetermined time to the optimal ping interval transmitted by the server to the electronic device according to a predetermined rate and transmitting the added optimal ping interval,
wherein the optimal ping interval is determined based on a channel state.

12. The method of claim 6, further comprising:
receiving by the server the ping request from the electronic device and resetting the ping interval included in the ping request to the optimal ping interval when the ping interval included in the ping request is greater than the optimal ping interval; and
transmitting by the server the reset optimal ping interval to the electronic device.

13. The method of claim 13, wherein the network connection request includes a failed ping interval when the electronic device is not an initial request for the network connection.

14. An electronic device for setting a ping interval, the electronic device comprising:
a controller comprising one or more processors;
a non-transitory memory; and
one or more programs comprising machine executable code which is stored in the non-transitory memory and is executed by the one or more processors,
wherein the one or more processors are configured by the machine executable code of the electronic device to perform the method of any of claims 1 to 5.

15. A server device for setting a ping interval, the server device comprising;
a controller comprising one or more processors;
a non-transitory memory; and
one or more programs comprising machine executable code which is stored in the memory and is configured to be executed by the one or more processors,
wherein the one or more processors are configured by the machine executable code of the electronic device to perform the method of any of claims 6 to 13.
